(19) Europäisches Patentamt
European Patent Office
Office européen des brevets

(11) Veröffentlichungsnummer: **0 241 728 A1**

(12) # EUROPÄISCHE PATENTANMELDUNG

(21) Anmeldenummer: **87103749.5**

(22) Anmeldetag: **14.03.87**

(51) Int. Cl.4: **C08L 65/00**, H01B 1/12

(30) Priorität: **19.03.86 DE 3609137**

(43) Veröffentlichungstag der Anmeldung:
**21.10.87 Patentblatt 87/43**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Naarmann, Herbert, Dr.**
**Haardtblick 15**
**D-6719 Wattenheim(DE)**

(54) **Filme aus elektrisch leitfähigen Polymeren sowie mit diesen Filmen beschichtete Elektrodenmaterialen.**

(57) Filme aus elektrisch leitfähigen Polymeren, enthaltend 0,1 bis 20 Gew.% eines wasserlöslichen oder wasserverdünnbaren säuregruppenfreien Polymeren.

EP 0 241 728 A1

Xerox Copy Centre

# Filme aus elektrisch leitfähigen Polymeren sowie mit diesen Filmen beschichtete Elektrodenmaterialien

Die Erfindung betrifft Filme aus elektrisch leitfähigen Polymeren, enthaltend 0,1 bis 50 Gew.% eines wasserlöslichen, im wesentlichen säuregruppenfreien Polymeren, mit diesen Filmen beschichtete Elektrodenmaterialien und ein Verfahren zur Herstellung derartiger Filme.

Außerdem betrifft die Erfindung die Verwendung solcher Filme und mit diesen Filmen beschichtete Elektrodenmaterialien als Elektrodenmaterial und zur antistatischen Ausrüstung von Kunststoffen sowie zur Abschirmung elektromagnetischer Wellen.

Die Herstellung von filmförmigen elektrisch leitfähigen Polymeren durch anodische Oxidation in polaren, organischen Elektrolyt-Lösungsmitteln in Gegenwart von Leitsalzen ist an sich bekannt und in der DE-A-30 49 551 beschrieben. Nachteilig an diesem Verfahren ist der Einsatz von organischen Lösungsmitteln und die relativ geringe Flexibilität der erhaltenen Filme.

In der US-A-3 574 072 wird die elektrochemische Polymerisation von 5-und 6-gliedrigen Heterocyclen beschrieben. Die Elektrolyse wird in einem organischen Lösungsmittel, welches mit wäßrigen Basen alkalisch gestellt ist, durchgeführt. Dieses Verfahren führt ebenfalls nur zu wenig brauchbaren Produkten, insbesondere können keine verwendbaren Polymerfilme erhalten werden.

Aus der EP-A-129 070 ist ein Verfahren zur elektrochemischen Polymerisation von Poly(heteroaromaten) in wäßrigen Lösungsmitteln bekannt, wobei für dieses Verfahren wesentlich ist, daß das Elektrolyt-Lösungsmittel ein Dispergiermittel enthält. Die nach diesem Verfahren erhaltenen Filme sind relativ spröde und daher in ihrem praktischen Anwendungsbereich eingeschränkt.

Der Erfindung lag daher die Aufgabe zugrunde, Filme aus elektrisch leitfähigen Polymeren zur Verfügung zu stellen, die eine ausreichende Stabilität und Flexibilität besitzen, um sie problemlos dem beabsichtigten Verwendungszweck zuführen zu können und die andererseits durch ein einfaches Verfahren herstellbar sind.

Erfindungsgemäß wird diese Aufgabe gelöst durch Filme aus elektrisch leitfähigen Polymeren, enthaltend 0,1 bis 50 Gew.% eines wasserlöslichen, im wesentlichen säuregruppenfreien Polymeren.

Weiterhin werden gemäß der Erfindung mit diesen Filmen beschichtete Elektrodenmaterialien zur Verfügung gestellt.

Bevorzugte erfindungsgemäße Filme und mit diesen Filmen beschichtete Elektrodenmaterialien sind den Unteransprüchen und der anschließenden detaillierten Beschreibung zu entnehmen.

Gegenstand der Erfindung ist weiterhin ein Verfahren zur Herstellung derartiger Filme durch elektrochemische Polymerisation der Monomeren an flächigen Elektroden in wäßrigen Elektrolyt-Lösungsmitteln in Gegenwart von Leitsalzen, welches dadurch gekennzeichnet ist, daß man dem Elektrolyt-Lösungsmittel ein wasserlösliches, im wesentlichen säuregruppenfreies Polymer oder eine Emulsion eines entsprechenden Monomeren zusetzt, welches im Anschluß an die elektrochemische Polymerisation in Polymere überführt wird, und die Filme von der Elektrode, auf der sie abgeschieden wurden, löst.

Monomere, die durch elektrochemische Polymerisation, insbesondere anodische Oxidation, in elektrisch leitfähige Polymere überführt werden können, sind in der Literatur beschrieben, weshalb sich hier detaillierte Angaben erübrigen. Nur beispielsweise seien 5-und 6-gliedrige Heterocyclen mit Sauerstoff, Stickstoff oder Schwefel als Heteroatomen und einem konjugierten π-Elektronensystem genannt, z.B. Pyrrol, Thiophen und Furan, sowie an den C-Atomen alkyl-oder halogensubstituierte Derivate dieser Monomere. Ebenfalls geeignet ist auch Anilin sowie aromatische Verbindungen wie Toluol oder Benzol, die durch anodische Oxidation in elektrisch leitfähige Polymere überführt werden können, indem man als Elektrolyt-Lösungsmittel z.B. Nitromethan oder $SO_2$ verwendet. Neben den vorstehend genannten Monomeren sind auch solche der allgemeinen Formel

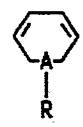

wobei A = P, Sb oder As und R eine Arylgruppe, vorzugsweise Phenyl, ist, geeignet.

Die Monomeren können allein oder auch zusammen mit anderen Comonomeren eingesetzt werden. Die relativen Anteile der Comonomeren sind nicht kritisch und können in weiten Bereichen schwanken, so daß durch Variation der Monomerverhältnisse und der Monomeren selbst in einfacher Weise eine große Vielfalt von Filmen aus elektrisch leitfähigen Polymeren hergestellt werden kann.

Besonders bevorzugte Monomere, welches gute Filme liefern, sind Pyrrol bzw. substituierte Pyrrole, die in 2-und 4-Stellung alkyl-oder halogensubstituiert sind.

Wesentlich für die vorteilhaften Eigenschaften der erfindungsgemäßen Filme aus elektrisch leitfähigen Polymeren ist, daß diese 0,1 bis 50, vorzugsweise 0,5 bis 35 Gew.% eines wasserlöslichen, im wesentlichen säuregruppenfreien Polymeren enthalten. Diese Polymere verleihen den Filmen sehr gute mechanische Eigenschaften, insbesondere eine gute Flexibilität, die eine einfache Handhabung der Filme ermöglicht. Die Gefahr von Beschädigungen oder Bruch der Filme beim Ablösen von den Elektroden und der weiteren Verarbeitung wird dadurch wesentlich verringert.

Als wasserlösliche, im wesentlichen säuregruppenfreie Polymere eignen sich eine Vielzahl von Verbindungen. Nur beispielsweise seien hier Polyvinylalkohole, Polyvinylether, Polyvinylpyrrolidon, Polymethylvinylether, Celluloseether und Polyvinylimidazole genannt. Auch natürliche Polymere wie Cellulose und modifizierte Polymere wie Ligninsulfat, können eingesetzt werden. Das Molekulargewicht dieser Verbindungen liegt im allgemeinen im Bereich von 1000 bis 1000000, vorzugsweise im Bereich von 5000 bis 150000.

Ebenfalls geeignet sind Polymere, die erst durch nachträgliche Polymerisation der entsprechenden Monomeren nach Herstellung der Filme aus elektrisch leitfähigen Polymeren erzeugt werden. Nähere Angaben finden sich in der anschließenden Beschreibung des erfindungsgemäßen Verfahrens zur Herstellung derartiger Filme.

Das erfindungsgemäße Verfahren zur Herstellung von Filmen aus elektrisch leitfähigen Polymeren durch elektrochemische Polymerisation der Monomeren an flächigen Elektroden in wäßrigen Elektrolyt-Lösungsmitteln in Gegenwart von Leitsalzen ist dadurch gekennzeichnet, daß man dem Elektrolyt-Lösungsmittel ein wasserlösliches, im wesentlichen säuregruppenfreies Polymer oder eine Emulsion eines entsprechenden Monomeren zusetzt, welches im Anschluß an die elektrochemische Polymerisation polymerisiert wird, und die erhaltenen Filme von der Elektrode, auf der sie abgeschieden wurden, ablöst.

Das erfindungsgemäße Verfahren eignet sich auch zur kontinuierlichen Herstellung von Filmen aus elektrisch leitfähigen Polymeren an sich bewegenden Elektroden. Ein solches Verfahren ist z.B. für die Herstellung von Polypyrrolfilmen in der US-A-4 468 291 beschrieben. Als sich bewegende Elektrode eignen sich z.B. eine sich drehende zylindrische Walze oder ein endloses Band, um nur zwei Möglichkeiten zu nennen. Durch die Bewegung der Elektrode wird kontinuierlich ein Film aus elektrisch leitfähigen Polymeren auf diese Elektrode abgeschieden, welcher wiederum kontinuierlich von der Elektrode mit Hilfe einer entsprechenden Ablöseeinrichtung abgezogen wird. Nähere Einzelheiten hierzu sind der US-A-4 468 291 zu entnehmen.

Erfindungsgemäß wird die elektrochemische Polymerisation in wäßrigen Elektrolyt-Lösungsmitteln durchgeführt. Dies können prinzipiell Wasser allein oder Mischungen von Wasser mit wasserlöslichen organischen Lösungsmitteln sein. Als wasserlösliche organische Lösungsmittel seien beispielsweise Alkohole, wie Methanol und Ethanol oder Diethylenglycol, Ether wie z.B. Tetrahydrofuran, Ketone, Acetonitril, Dimethylformamid und Dimethylsulfoxid genannt. Der Wassergehalt des Elektrolyt-Lösungsmittels beträgt vorzugsweise nicht mehr als 80 Gew.%, insbesondere nicht mehr als 50 Gew.%.

Der pH-Wert des Elektrolyt-Lösungsmittels kann ebenfalls in weiten Bereichen schwanken, es hat sich jedoch als vorteilhaft erwiesen, wenn der pH-Wert nicht mehr als 7 beträgt. Vorzugsweise liegt der pH-Wert im Bereich von 2 bis 6.

Falls sich der pH-Wert im Verlauf der Reaktion ändert, kann gegebenenfalls durch Zugabe geeigneter Säuren der pH-Wert im gewünschten Bereich gehalten werden.

Die elektrochemische Polymerisation wird in Gegenwart eines Leitsalzes durchgeführt, welches zum einen das Komplexierungsmittel für die elektrisch leitfähigen Polymere liefert und zum anderen den Stromtransport während der elektrochemischen Polymerisation in dem Elektrolyt-Lösungsmittel besorgt. Als Leitsalze kommen alle hierfür üblichen und bekannten ionischen oder ionisierbaren Verbindungen in Betracht, die in dem Elektrolyt-Lösungsmittel löslich sind und deren Abscheidungspotential ihres Anions bei der elektrochemischen Polymerisation nicht erreicht wird.

Als Kationen für die Leitsalze sind Alkalimetall-, Erdalkalimetall-, $NO^+$, $NO_2^+$ sowie insbesondere Oniumkationen, vor allem des Stickstoffs und des Phosphors des Typs $R_4N^+$ und $R_4P^+$ geeignet, worin die Reste R Wasserstoff und/oder niedere Alkylreste, cycloaliphatische Reste oder aromatische Reste bedeuten können. Außerdem eignen sich grundsätzlich auch Kationen von Schwermetallen, wie Kupfer, Zink, Nickel, Chrom, Blei und Cadmium, d.h. ganz allgemein Kationen der Metalle der Gruppen Ib, IIb, IVb, Vb, VIb, VIIb und VIIIb des Periodensystems der Elemente.

Als Anionen für das Leitsalz haben sich $BF_4^-$, $AsF_4^-$, $AsF_6^-$, $SbF_6^-$, $SbCl_6^-$, $CF_6^-$, $ClO_4^-$, $HSO_4^-$ und $SO_4^-$ als besonders günstig erwiesen.

Eine weitere Gruppe von Leitsalzen leitet sich von aliphatischen oder aromatischen Carbonsäuren ab, beispielsweise Ameisensäure, Essigsäure, Propionsäure, Buttersäure, Valeriansäure, Fettsäuren mit 12 bis 18 C-Atomen, oder auch aromatischen Carbonsäuren. Von diesen werden die Fettsäuren, die Essigsäure und die Benzoesäure bevorzugt.

Ebenfalls geeignet als Leitsalze sind aliphatische und aromatische Sulfonsäuren bzw. deren Salze, wie z.B. Phenylsulfonsäure, Styrolsulfonsäure, Phthalocyaninsulfonsäuren bzw. deren Alkyl-und Alkylarylsulfonate und auch Salze der Salpetersäure oder der Schwefelsäure.

Die Konzentration der Leitsalze im Elektrolyt-Lösungsmittel liegt im allgemeinen im Bereich zwischen 0,01 und 10 Gew.%, vorzugsweise im Bereich von 0,05 bis 1 Gew.%.

Gegebenenfalls kann das Elektrolyt-Lösungsmittel auch Dispergiermittel enthalten, wie sie z.B. in der EP-A-129 070 beschrieben sind. Nur stellvertretend seien hier Alkalisalze von Alkylsulfonaten, Alkylarylsulfonaten, Alkylsulfaten und Fettalkoholsulfonaten genannt. Nähere Einzelheiten sind der EP-A-129 070 zu entnehmen.

Wesentlich für das erfindungsgemäße Verfahren ist, daß man dem Elektrolyt-Lösungsmittel ein wasserlösliches, im wesentlichen säuregruppenfreies Polymer oder eine Emulsion eines entsprechenden Monomeren zusetzt, welches im Anschluß an die elektrochemische Polymerisation polymerisiert wird, und die Filme von der Elektrode, auf der sie abgeschieden wurden, ablöst.

Als wasserlösliche, im wesentlichen säuregruppenfreie Polymere werden die bereits erwähnten Arten von Polymeren eingesetzt.

Als Monomere, die in Emulsion eingesetzt werden können, eignen sich z.B. Styrol oder substituierte Styrole, um nur zwei Beispiele zu nennen. Diese werden nach Herstellung der Filme aus den elektrisch leitfähigen Polymeren durch thermische oder radikalische Polymerisation in Polymere überführt. Vorzugsweise werden dazu die Filme, gegebenenfalls zusammen mit der Elektrode auf denen sie abgeschieden wurden, aus dem Elektrolyt-Lösungsmittel herausgenommen und die Reste an Lösungsmittel entfernt. Die an den Filmen anhaftenden Tröpfchen der Monomeremulsion werden dann anschließend thermisch oder radikalisch in Polymere überführt.

Neben der erwünschten Flexibilisierung der Filme durch den Zusatz der Polymeren bzw. der Monomer-Emulsionen läßt sich durch den Zusatz dieser Verbindungen in gewissen Grenzen auch die elektrische Leitfähigkeit der Polymerfilme beeinflussen.

Der Anteil der wasserlöslichen oder wasserverdünnbaren säuregruppenfreien Polymeren bzw. der entsprechenden Monomeren beträgt vorzugsweise 0,5 bis 15 Gew.%, bezogen auf das Gewicht des Elektrolyt-Lösungsmittels.

Das erfindungsgemäße Verfahren kann in üblichen, an sich bekannten elektrolytischen Zellen oder Elektrolyse-Apparaturen durchgeführt werden. Gut geeignet sind beispielsweise einfache Elektrolyse-Apparaturen, bestehend aus einer Zelle ohne Diaphragma, zwei Elektroden und einer externen Stromquelle. Die Elektroden können dabei beispielsweise aus Graphit oder einem üblichen inerten Elektrodenmaterial sein. Dies sind z.B. Edelmetalle, wie Platin oder Palladium, Edelstahl, Nickel oder Titan. Ebenfalls geeignet sind Elektroden aus C-Fasern oder C-Fasergeweben, wobei bei Verwendung derartiger Elektroden der Polymerfilm in der Regel fest auf der Elektrode haftet, während bei Verwendung von Edelmetallen oder Stahl als Elektrodenmaterial eine leicht Ablösung der Polymerfilme von der Trägerelektrode möglich ist. Die Wahl des Elektrodenmaterials ist also auch davon abhängig, ob die hergestellten Polymerfilme im Anschluß an die Polymerisation zusammen mit der Elektrode, auf der sie abgeschieden wurden, weiterverarbeitet werden sollen oder die Filme als solche. Im letzteren Fall sollten entsprechend Edelmetall-oder Stahlelektroden eingesetzt werden.

Außer der erwähnten einfachen elektrolytischen Zelle ohne Diaphragma können auch andere Elektrolyseeinrichtungen für das erfindungsgemäße Verfahren Einsatz finden, beispielsweise Zellen mit Diaphragma oder solche mit Referenzelektroden zur exakten Potentialbestimmung. Häufig ist eine Messung der geflossenen Strommenge sehr zweckmäßig, da hierüber u.a. die Schichtstärke der abgeschiedenen Filme kontrolliert werden kann.

Wie bereits erwähnt, kann das erfindungsgemäße Verfahren auch zur kontinuierlichen Herstellung von Polymerfilmen, wie dies in der US-A-4 468 291 beschrieben ist, verwendet werden.

Vorzugsweise werden die während der Elektrolyse anodisch abgeschiedenen Filme aus elektrisch leitfähigen Polymeren zur Entfernung von anhaftendem Leitsalz und gegebenenfalls Emulgator mit Lösungsmitteln, vorzugsweise Wasser oder wäßrigen Lösungsmitteln, gewaschen und bei Temperaturen im Bereich von 25 bis 150°C, vorzugsweise im Vakuum, getrocknet. Wie bereits erwähnt, lassen sich dann bei

Einsatz von Graphit-, Edelmetall-, Stahl-, Titan-, Nickel-oder ähnlichen Elektroden die hergestellten Filme leicht von der Elektrode ablösen. Dies ist vor allem dann der Fall, wenn Schichtstärken über 20 µm abgeschieden wurden. Die so erhaltenen Filme sind selbsttragend, stabil und haben gute mechanische Eigenschaften und eine hohe Flexibilität.

Die Temperatur, bei der die elektrochemische Polymerisation durchgeführt wird, ist an sich nicht kritisch, liegt aber im allgemeinen im Bereich von -5 bis 100°C. Wesentlich ist lediglich, daß die Erstarrungstemperatur bzw. Siedetemperatur des Elektrolyt-Lösungsmittels nicht unter-bzw. überschritten wird. Als besonders vorteilhaft haben sich Temperaturen im Bereich von 10 bis 40°C, insbesondere von 20 bis 30°C erwiesen, so daß die Polymerisation im allgemeinen vorteilhaft bei Raumtemperatur durchgeführt werden kann.

Als Stromquelle für den Betrieb der elektrolytischen Zelle, in der das erfindungsgemäße Verfahren durchgeführt wird, eignet sich jede Gleichstromquelle, die eine hinreichend hohe elektrische Spannung liefert. Üblicherweise wird die erfindungsgemäße elektrochemiche Polymerisation bei einer Spannung von mindestens 10 Volt, vorzugsweise im Bereich von 10 bis 25 Volt und besonders bevorzugt im Bereich von 10 bis 20 Volt, durchgeführt. Die Höhe der gewählten Spannung hängt dabei u.a. vom Elektrodenabstand ab und ist umso höher, je größer dieser ist.

Die Stromdichte im erfindungsgemäßen Verfahren liegt im allgemeinen im Bereich von 0,05 bis 50 $mA/cm^2$, vorzugsweise im Bereich von 0,1 bis 5 $mA/cm^2$.

Die Dauer der elektrochemischen Polymerisation hängt von dem verwendeten Elektrolyt-System, den jeweiligen Elektrolysebedingungen und insbesondere natürlich auch von der gewünschten Dicke des elektrisch leitfähigen Polymerfilms ab. Im allgemeinen lassen sich in einem Zeitraum von 2 bis 12 Stunden Filme aus elektrisch leitfähigen Polymeren mit einer Dicke im Bereich von 10 bis 100 µm herstellen. Durch entsprechende Verlängerung der Zeit lassen sich jedoch auch dickere Filme erzielen.

Die erfindungsgemäßen Filme aus elektrisch leitfähigen Polymeren besitzen neben guten mechanischen Eigenschaften, insbesondere einer hohen Flexibilität, auch eine hohe elektrische Leitfähigkeit. Diese liegt im allgemeinen über $10^{-2} Scm^{-1}$, insbesondere über $1^{-0} Scm^{-1}$. Zumindest teilweise wird bei der elektrochemischen Polymerisation das Anion des bei der Herstellung eingesetzten Leitsalzes als Dotierungsmittel in die Polymerfilme eingelagert.

Die erfindungsgemäßen Filme eignen sich besonders zur Verwendung als Elektrodenmaterialien, sowie zur antistatischen Ausrüstung von Kunststoffen und zur Abschirmung elektromagnetischer Wellen. Ferner können sie auch in elektrischen Schaltern und Halbleiter-Bauteilen eingesetzt werden.

Genauso ist es möglich, falls die Abscheidung der Filme auf geeigneten Trägern erfolgte, die so erhaltenen Produkte, d.h. die mit den Filmen aus elektrisch leitfähigen Polymeren beschichteten Elektrodenmaterialien direkt einer weiteren Verwendung, z.B. in elektrochemischen Zellen, zuzuführen.

## Beispiel 1

Zu 12.000 g Wasser wurden 120 g Pyrrol, 30 Teile Ligninsulfat (entsprechend 25 Gew.% des eingesetzten Pyrrols) und 40 g Natriumdodecylsulfat zugegeben. Anschließend wurde 60 min bei 22°C und einer Stromdichte von 3 $mA/cm^2$ bei einem Elektrodenabstand von 2 cm polymerisiert. Es wurde ein 100 µm dicker Polypyrrolfilm mit einer elektrischen Leitfähigkeit von $\sigma = 20\ Scm^{-1}$ und einer Reißfestigkeit von 40 $N/mm^2$ erhalten.

## Beispiel 2

Es wurde wie in Beispiel 1 gearbeitet, jedoch anstatt Natriumdodecylsulfat 40 g Styrolsulfonsäure zugegeben. Der erhaltene Film hatte eine Dicke von 100 µm und eine Leitfähigkeit von 35 S/cm. Nach 30 min Erwärmen auf 100°C betrug die Reißfestigkeit 150 $N/mm^2$.

## Beispiele 3 bis 6

Es wurde wie in Beispiel 1 gearbeitet, doch die in der nachfolgenden Tabelle angegebenen Leitsalze und wasserlöslichen Polymeren eingesetzt. Die Dicke der erhaltenen Polymerfilme betrug jeweils 100 µm.

Tabelle

| Bsp. Nr. | Monomer | g | Leitsalz | g | Polymer g (Gew.%)[1] | Leitfähigkeit S/cm | Reißfestigkeit $N/mm^2$ |
|---|---|---|---|---|---|---|---|
| 3 | Pyrrol<br>N-Methylpyrrol | 100<br>50 | wie Bsp. 1 | wie Bsp. 1 | Polyvinylpyrrolidon 30 (20) | 30 | 80 |
| 4 | Pyrrol<br>Furan | 100<br>50 | wie Bsp. 1 | wie Bsp. 1 | Polyvinylmethylether 50 (33) | 35 | 190 |
| 5 | Pyrrol | 100 | wie Bsp. 1 | 300 | Cellulosemethylether 50 (33) | 35 | 210 |
| 6 | Pyrrol | 100 | Pyrrolsulfonsäure | 50 | Polyvinylimidazol 30 (30) | 40 | 175 |

1) bezogen auf eingesetztes Monomeres

## Ansprüche

1. Filme aus elektrisch leitfähigen Polymeren, enthaltend 0,1 bis 50 Gew.% eines wasserlöslichen, im wesentlichen säuregruppenfreien Polymeren sowie mit diesen Filmen beschichtete Elektrodenmaterialien.

2. Filme nach Anspruch 1, dadurch gekennzeichnet, daß das wasserlösliche, im wesentlichen säuregruppenfreie Polymer ein Polyvinylalkohol, ein Polyvinylether, ein Polyvinylpyrrolidon, ein Polymethylvinylether, ein Celluloseether und/oder ein Polyvinylimidazol ist.

3. Verfahren zur Herstellung von Filmen gemäß Anspruch 1 durch elektrochemische Polymerisation der Monomeren an flächigen Elektroden in wäßrigen Elektrolyt-Lösungsmitteln in Gegenwart von Leitsalzen, dadurch gekennzeichnet, daß man dem Elektrolyt-Lösungsmittel ein wasserlösliches, im wesentlichen säuregruppenfreies Polymer oder eine Emulsion eines entsprechenden Monomeren zusetzt, welches im Anschluß an die elektrochemische Polymerisation polymerisiert wird, und die Filme von der Elektrode, auf der sie abgeschieden wurden, ablöst.

4. Verwendung der Filme und der mit diesen Filmen beschichteten Elektrodenmaterialien gemäß den Ansprüchen 1 und 2 als Elektrodenmaterial, zur antistatischen Ausrüstung von Kunststoffen oder zur Abschirmung elektromagnetischer Wellen.

Europäisches Patentamt

# EUROPÄISCHER RECHERCHENBERICHT

Nummer der Anmeldung
EP 87 10 3749

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 428 843 (BASF)<br>* Ansprüche 1-4; Seite 14, Zeilen 5-17; Seite 18, Beispiel 10 *<br>--- | 1-4 | C 08 L 65/00<br>H 01 B 1/12 |
| X | US-A-3 932 564 (A.H. MARKHART et al.)<br>* Anspruch 1; Zusammenfassung *<br>--- | 1 | |
| A | EP-A-0 144 600 (BROWN BOVERI)<br>--- | | |
| A | EP-A-0 154 938 (BASF)<br>--- | | |
| A | EP-A-0 053 669 (BASF)<br>--- | | RECHERCHIERTE SACHGEBIETE (Int. Cl.4) |
| A | DE-A-3 200 073 (BASF)<br>--- | | H 01 B<br>C 08 L |
| A | EP-A-0 157 257 (BASF)<br>--- | | |
| D,A | EP-A-0 055 358 (BASF)<br>--- | | |
| D,A | EP-A-0 129 070 (BASF)<br>----- | | |

Der vorliegende Recherchenbericht wurde für alle Patentansprüche erstellt.

| Recherchenort | Abschlußdatum der Recherche | Prüfer |
|---|---|---|
| DEN HAAG | 28-07-1987 | STIENON P.M.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82